(19) Europäisches Patentamt

European Patent Office

Office européen des brevets

(11) Veröffentlichungsnummer: **0 162 311**
**A2**

(12) **EUROPÄISCHE PATENTANMELDUNG**

(21) Anmeldenummer: **85104878.5**

(22) Anmeldetag: **22.04.85**

(51) Int. Cl.⁴: **H 04 N 5/228**

---

(30) Priorität: **25.04.84 DE 3415414**
**10.10.84 DE 3437208**
**10.10.84 DE 3437210**

(43) Veröffentlichungstag der Anmeldung:
**27.11.85 Patentblatt 85/48**

(84) Benannte Vertragsstaaten:
**AT DE FR GB IT**

(71) Anmelder: **ARNOLD & RICHTER CINE TECHNIK GMBH & CO. BETRIEBS KG.**
**Türkenstrasse 89**
**D-8000 München 40(DE)**

(84) Benannte Vertragsstaaten:
**AT DE FR GB IT**

(71) Anmelder: **Brauch Leena**
**Darmstädter Strasse 2**
**D-6107 Reinheim(DE)**

(84) Benannte Vertragsstaaten:
**DE**

(72) Erfinder: **Gebauer, Volker Martin**
**Zaunkönigstrasse 7**
**D-8037 Olching(DE)**

(72) Erfinder: **Wietzke, Joachim**
**Hochstrasse 14**
**D-6105 Ober-Ramstadt-Hahn(DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22(DE)**

---

(54) Steuerschaltung für eine Videokamera und Verfahren zum Steuern einer Videokamera.

(57) Die vorliegende Erfindung betrifft eine Steuerschaltung für eine Videokamera, mit der ein Ladungsbild eines aufzunehmenden Objektes erzeugbar ist, das bei einem Auslesen des Ladungsbildes zum Erzeugen eines Videoausgangssignales wenigstens teilweise gelöscht wird. Ferner betrifft die Erfindung ein Verfahren zum Steuern einer derartigen Videokamera.

Um ein Bildflimmern eines mit dem Videoausgangssignal erzeugten Videobildes bei periodisch unterbrochener Lichtzufuhr zur Videokamera zu vermeiden, wird ein Auslesen des Ladungsbildes der Videokamera periodisch zumindest während der Zeitdauer unterbunden, während der eine Lichtzufuhr von dem aufzunehmenden Objekt zur Videokamera vorliegt.

./...

FIG.1

Steuerschaltung für eine Videokamera und
Verfahren zum Steuern einer Videokamera

B e s c h r e i b u n g

Die vorliegende Erfindung betrifft eine Steuerschaltung für eine Videokamera, mit der ein Ladungsbild eines aufzunehmenden Objektes erzeugbar ist, das bei einem Auslesen des Ladungsbildes zum Erzeugen eines Videoausgangssignales der Videokamera wenigstens teilweise gelöscht wird. Darüber hinaus betrifft die vorliegende Erfindung ein Verfahren zum Steuern einer Videokamera mit den Verfahrensschritten des Erzeugens eines Ladungsbildes eines aufzunehmenden Objektes und des Erzeugens eines Videoausgangssignales durch ein wenigstens teilweise das Ladungsbild löschendes Auslesen des Ladungsbildes.

Videokameras mit Steuerschaltungen, die periodisch ein Ladungsbild eines aufzunehmenden Objektes mittels eines Bildwandlers, der als Vidikon-Röhre ausgeführt sein kann, erzeugen, sind seit geraumer Zeit bekannt. Bei einer derartigen bekannten Videokamera wird das Ladungsbild der Vidikon-Röhre zum Erzeugen eines Videoausgangssignales periodisch abgetastet. Bei einem derartigen Abtasten des Ladungsbildes der Vidikon-Röhre wird das Ladungsbild zumindest teilweise gelöscht. Die Steuerung der Abtastung des Ladungsbildes zum Erzeugen des Videoausgangssignals wird bei der bekannten Videokamera mittels Vertikal- und Horizontalsynchronisationssignalen vorgenommen, die ein Auslesen des Ladungsbildes in Synchronisation mit Vertikalsynchronisationsimpulsen und Horinzontalsynchronisationsimpulsen bewirken, wobei der zeitliche Abstand zwischen zwei aufeinander folgenden Synchronisationsimpulsen, der die Auslesewiederholungsgeschwindigkeit für das Ladungsbild bestimmt, von der Fernsehnorm abhängt, mit der die betreffende Videokamera arbeitet.

Eine derartige bekannte Videokamera mit einer Steuerschaltung arbeitet äußerst zufriedenstellend bei kontinuierlicher Lichtzufuhr vom aufzunehmenden Objekt zur Videokamera.

Wird jedoch die bekannte Videokamera zum Aufnehmen eines Objektes mit einer periodisch schwankenden oder periodisch unterbrochenen Lichtzufuhr von dem aufzunehmenden Objekt zur Videokamera verwendet, so weist das mittels des Videoausgangssignales der Videokamera erzeugte Bild eines Videowiedergabegerätes ein starkes Flimmern auf.

Ein in der Praxis bedeutsamer Fall, bei dem derartige Probleme auftreten, liegt in der Verwendung der Videokamera zum Erzeugen eines Monitorsignals oder zum Erzeugen eines für spätere Filmschnittarbeiten dienenden Videobandes bei einer Laufbild-Spiegelreflex-Filmaufnahmekamera. In einem derartigen Fall wird die Videokamera in einem Sucherstrahlengang der Laufbild-Spiegelreflex-Filmaufnahmekamera angeordnet, sei es, um auf einem oder mehreren Monitoren anderen Personen als nur dem Kameramann die Beurteilung des momentan aufgenommenen Bildes zu ermöglichen, sei es, um zur Unterstützung späterer Filmschnittarbeiten eine zur gefilmten Szene parallel laufende Videoaufnahme auf einem Videoband zu erstellen, auf dem gegebenenfalls zusätzlich Daten für den Filmschnitt aufgenommen werden. In diesem Fall kommt das periodische Vorliegen und Fehlen einer Lichtzufuhr von dem aufzunehmenden Objekt zur Videokamera dadurch zustande, daß eine bewegliche Spiegelblende in dem Strahlengang der Laufbild-Spiegelreflex-Filmaufnahmekamera periodisch den Lichtweg vom aufzunehmenden Objekt abwechselnd zum zu belichtenden Film hin freigibt bzw. zu der im Sucherstrahlengang angeordneten Videokamera umlenkt.

Ausgehend von diesem Stand der Technik liegt der vorliegenden Erfindung die Aufgabe zugrunde, eine Steuerschaltung für eine Videokamera nach dem Oberbegriff des Anspruchs 1 sowie ein Verfahren zum Steuern einer Videokamera nach dem Oberbegriff des Anspruchs 17 so weiterzubilden, daß auch bei schwankender, insbesondere periodisch unterbrochener Lichtzufuhr von dem aufzunehmenden Objekt zur Videokamera ein flimmerfreies Videobild erzeugbar ist.

Diese Aufgabe wird bei einer Steuerschaltung mit den Merkmalen gemäß des Oberbegriffs des Anspruchs 1 durch die im kennzeichnenden Teil dieses Anspruchs enthaltenen Merkmale und bei einem Verfahren mit den Merkmalen gemäß des Oberbegriffs des Anspruchs 17 durch die im kennzeichnenden Teil dieses Anspruchs angegebenen Merkmale gelöst.

Die Erfindung beruht auf der Erkenntnis, daß bei der oben beschriebenen Anordnung der bekannten Videokamera innerhalb einer Laufbild-Spiegelreflex-Filmaufnahmekamera ein Bildflimmern des mit dem Videoausgangssignal der Videokamera erzeugbaren Videobildes nicht nur dadurch verursacht wird, daß die Spiegelblende den Lichtweg zur Videokamera periodisch unterbricht, so daß während entsprechender Zeiten aufgenommene Bildpunktes des Ladungsbildes schwarz sind, sondern auch dadurch zustande kommt, daß die zur Aufladung eines Bildpunktes des Ladungsbildes wirksame Zeit zwischen dem letzten löschenden Auslesen und dem nächsten löschenden Auslesen des Ladungsbildes durch von Bild zu Bild wechselnde Zeitintervalle verkürzt wird, während denen der Lichtweg zur Videokamera unterbrochen ist. Mit anderen Worten ist die jeweilige Zeitspanne wirksamer Belichtung für ein Bildelement des Ladungsbildes zwischen einem löschenden Auslesen des Ladungsbildes zum Erzeugen eines Videoausgangssignales und dem nächsten löschenden Auslesen des Ladungsbildes zum Erzeugen des nächsten Videoausgangssignales von Bild zu Bild unterschiedlich lang, da die übliche Bildfolgefrequenz einer Laufbild-Spiegelreflex-Filmaufnahmekamera nicht mit der Teilbildfolgefrequenz einer Videokamera übereinstimmt. So beträgt beispielsweise die Bildfolgefrequenz einer Laufbild-Spiegelreflex-Filmaufnahmekamera üblicherweise 24 Bilder pro Sekunde, während die
Teilbildfolgefrequenz bzw. Halbbildfolgefrequenz einer
üblichen Videokamera bei 60 Teilbildern pro Sekunde liegt.

Erfindungsgemäß wird das Bildflimmern dadurch behoben,
daß das Auslesen des Ladungsbildes zum Erzeugen des Videoausgangssignals während der Lichtzufuhr zur Videokamera
verhindert wird, so daß also ein Auslesen des Ladungsbildes
nur bei unterbrochener Lichtzufuhr zur Videokamera möglich
ist. Dies bewirkt, daß die für die Bildpunkthelligkeit ausschlaggebende Belichtungsdauer von Videoteilbild zu Videoteilbild konstant bleibt. Mit anderen Worten wird die Zeitsteuerung für das Auslesen des Ladungsbildes zum Erzeugen
des Videoausgangssignals vorzugsweise derart vorgenommen,
daß die wirksame Belichtungszeit für jeden Bildpunkt
der vollen Zeitspanne der periodischen Lichtzufuhr zur
Videokamera entspricht.

Für die wirksame Belichtungszeit eines einzelnen Bildpunktes ist es ohne Bedeutung, zu welchem Zeitpunkt
während der Zeitdauer der unterbrochenen Lichtzufuhr
das Auslesen des Ladungsbildes stattfindet, da das Ladungspotential des Bildpunktes während der Zeitdauer
unterbrochener Lichtzufuhr konstant bleibt.

Die erfindungsgemäße Steuerschaltung für eine Videokamera
sowie das erfindungsgemäße Verfahren zum Steuern der Videokamera gewährleisten somit ein flimmerfreies Videobild unabhängig von der Bildfolgefrequenz der Laufbild-Spiegel-
reflex-Filmaufnahmekamera.

Bei dem Anwendungsfall der Videokamera innerhalb der Laufbild-Spiegelreflex-Filmaufnahmekamera ist die Zeitdauer
der Lichtzufuhr vom aufzunehmenden Objekt zur Videokamera
üblicherweise länger als diejenige Zeitspanne, die bei
Zugrundelegen des üblichen Videotaktes zum Aufbau des
Ladungsbildes zwischen zwei Zeitpunkten löschenden Auslesens zur Verfügung steht. In dem oben beschriebenen
Beispiel liegt diese Zeitdauer mit einer 48stel Sekunde
um etwa 25 % oberhalb der entsprechenden Videotakt-Zeitspanne von einer 60stel Sekunde. Dies führt in wünschenswerter Weise zu einer deutlich stärkeren Belichtung des
Bildwandlers der Videokamera.

Die in Anspruch 2 angegebene Weiterbildung der erfindungsgemäßen Steuerschaltung ermöglicht ein Auslesen des Bildspeichers im üblichen Videotakt unabhängig von der nunmehr
durch die Arbeitsweise der Laufbild-Spiegelreflex-Filmkamera beeinflußten Teilbildfolgefrequenz der Videokamera.
Dadurch, daß das Übernahmesignal zum Übernehmen des Ladungsbildes von der Videokamera zum Bildspeicher nur bei
Fehlen der Lichtzufuhr zur Videokamera erzeugt wird, wird
das Ladungsbild nur während seines statischen Zustandes
in den Bildspeicher übernommen. Der Bildspeicher kann ausgangsseitig mit einer Frequenz abgetastet werden, die von
der Teilbildfolgefrequenz der Videokamera unabhängig ist.
Dies ermöglicht die Anpassung an die jeweils gewünschte
Fernsehnorm.

Die bevorzugte Weiterbildung der erfindungsgemäßen Steuerschaltung nach Anspruch 3 sowie des Verfahrens gemäß Anspruch 19 gewährleistet ein rationelles Abspeichern, da
ein Übernehmen eines Teilbildes von der Videokamera in
den Bildspeicher nur dann vorgenommen wird, wenn das Teilbild einen neuen Bildinhalt hat. Ferner wird dadurch vermieden, daß nach einem löschenden Übernehmen eines Teilbildes in den Bildspeicher in fehlerhafter Weise eine weitere Teilbildübernahme stattfindet, die zu einem unerwünschten Löschen des Bildspeicherinhaltes führen würde.

In einfacher Weise kann das jeweilige Vorliegen und Fehlen einer Lichtzufuhr zur Videokamera durch die in Anspruch 4 beschriebene Verwendung eines fotoelektrischen Elementes ermittelt werden.

Eine zuverlässige Information über das Vorliegen oder Fehlen einer Lichtzufuhr vom aufzunehmenden Objekt zur Videokamera kann in dem Falle der bereits beschriebenen Verwendung der Videokamera innerhalb einer Spiegelreflexkamera durch Abtasten der Lage der Spiegelblende der Spiegelreflexkamera gewonnen werden.

Die in Anspruch 6 beschriebene Ableitung des Übernahmesignals für den Bildspeicher von dem das Auslesen des Ladungsbildes verhindernden Signal ist schaltungsmäßig sehr einfach zu realisieren.

Eine weitere Steigerung der Bildqualität wird durch die in den Ansprüchen 7 und 8 beschriebenen Weiterbildungen der erfindungsgemäßen Steuerung sowie durch die in dem Anspruch 20 angegebene Weiterbildung des erfindungsgemäßen Verfahrens erreicht. Es hat sich herausgestellt, daß ein Auslesen des Ladungsbildes zum Erzeugen des Videoausgangssignals, das nach Wegfall des das Auslesen verhindernden Signales an einem beliebigen Punkt innerhalb des Ladungsbildes gemäß dem momentanen Zeitpunkt innerhalb des Videotaktes zu horizontalen Streifen in dem erzeugten Videobild führt. Mittels der Vertikalrücksetzung der Zeitsteuerung für die Videokamera in Synchronisation mit dem Horizontalsynchronisationssignal der Videokamera und dem Ausgangssignal der Signalquelle wird erreicht, daß die Auslesung eines jeden Ladungsbildes an dessen ersten Bildpunkt beginnt. Vorzugsweise wird die Auslesung des Ladungsbildes darüber hinaus in Synchronisation mit dem Farbträgersignal vorgenommen, um eine jeweils konstante Phase des Farbträgers bei den aufeinander folgenden Teilbildern zu erreichen.

Eine einfache schaltungsmäßige Realisierung der angegebenen Synchronisation wird durch die in Anspruch 9 angegebene Schaltung erreicht.

Die in Anspruch 10 angegebene Steuerschaltung ermöglicht ein Auffrischen des Bildspeicherinhalts unabhängig von dessen Auslesung, so daß eine Erneuerung des Speicherinhalts niemals zu einer Störung des jeweils ausgelesenen Bildsignales führt.

Zweckmäßigerweise werden gemäß Anspruch 11 die Teilbereiche des Bildspeichers nach Abspeichern eines Teilbildes umgeschaltet.

Die in Anspruch 12 beschriebene Ausgestaltung ermöglicht ein Auslesen der jeweiligen Teilbild-Speicherinhalte ohne Berücksichtigung einer Ordnungszahl oder Phasenlage des Farbträgers des Teilbildes. Somit ist es mit der in Anspruch 12 beschriebenen Ausgestaltung der Steuerschaltung möglich, entsprechend der Frequenz der ausgangsseitigen Bildspeicherauslesung bezüglich der Frequenz der Abspeicherung von Teilbildern in den Bildspeicher-Teilbereichen mehrfach hintereinander Teilbilder aus einem Teilbereich auszulesen. In der an den Bildspeicherausgang angeschlossenen Farbaufbereitungsschaltung wird die Phase des Farbträgersignales, die von Teilbild zu Teilbild konstant ist, durch Phasenumschaltung an die jeweilige Fernsehnorm angepaßt.

Vorzugsweise ist dem Bildspeicher ein Analog-Digital-Wandler vorgeschaltet, der das Videoausgangssignal in die digitale Form umwandelt, ohne es vorher nach Luminanz- und Chrominanz-Anteilen aufgespalten zu haben.

Eine weitere Steigerung der Bildqualität wird durch die Weiterbildung der erfindungsgemäßen Steuerschaltung nach den Ansprüchen 14 bis 16 und durch die Weiterbildung des erfindungsgemäßen Verfahrens gemäß Anspruch 21 erreicht. Die zum Einstellen des Arbeitspunktes des Bildwandlers dienende Beleuchtungseinrichtung wird zumindest während der Zeitdauer des Fehlens der Lichtzufuhr zur Videokamera abgeschaltet. Somit wird eine völlige Konstanz des Ladungsbildes während der jeweiligen Zeitdauer des Fehlens der Lichtzufuhr zur Videokamera erreicht. Damit ist es möglich, das Ladungsbild zu einem beliebigen Zeitpunkt während des Fehlens der Lichtzufuhr auszulesen. Dies ist insbesondere dann bedeutsam, wenn es aus Gründen der Synchronisation des Auslesevorganges des Ladungsbildes zum Erzeugen des Videoausgangssignals mit dem Horizontalsynchronisationsimpuls der Videokamera erforderlich ist, den Auslesevorgang mit verschiedenen zeitlichen Abständen bezüglich des Zeitpunktes des Wegfalls der Lichtzufuhr zur Videokamera vorzunehmen.

Wenn auf die Einstellung eines optimalen Arbeitspunktes des Bildwandlers verzichtet werden kann, kann dies in äußerst einfacher Weise gemäß Anspruch 16 durch zeitlich unbegrenztes Abschalten der Beleuchtungseinrichtung erreicht werden.

Bevorzugte Ausführungsbeispiele der vorliegenden Erfindung werden nachfolgend unter Bezugnahme auf die beiliegenden Zeichnungen näher erläutert. Es zeigen:

Fig. 1 ein erstes Ausführungsbeispiel einer erfindungsgemäßen Steuerschaltung mit einer in einem Strahlengang einer Laufbild-Spiegelreflexkamera angeordneten Videokamera;

Fig. 2 eine abgewandelte Ausführungsform der erfindungsgemäßen Steuerschaltung für eine in einem Strahlengang einer Laufbild-Spiegelreflexkamera angeordnete Videokamera;

Fig. 3 eine zeitliche Signaldarstellung zum Erläutern der Funktionsweise der erfindungsgemäßen Steuerschaltung;

Fig. 4 ein detailliertes Schaltungsdiagramm der erfindungsgemäßen Steuerschaltung;

Fig. 5 ein Schaltungsdiagramm einer Farbaufbereitungsschaltung; und

Fig. 6 ein Schaltungsdiagramm einer Steuerschaltung zum Steuern einer Grundbeleuchtung eines Bildwandlers der Videokamera.

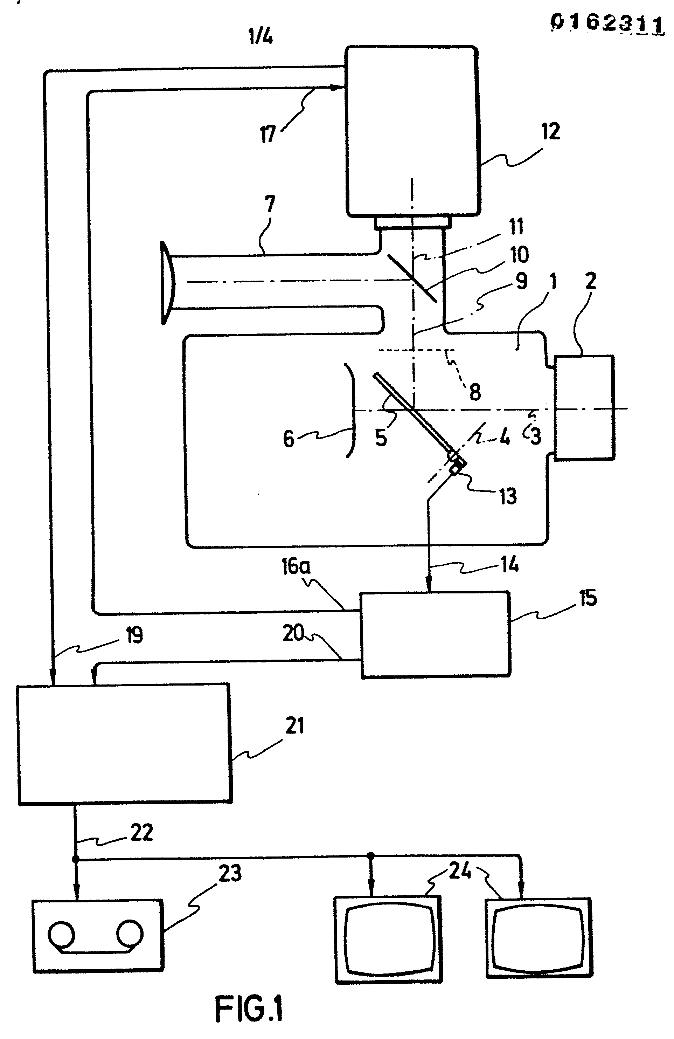

Zunächst wird auf Fig. 1 Bezug genommen. Eine an sich im Stand der Technik bekannte Laufbild-Spiegelreflex-Filmaufnahmekamera 1 hat ein Objektiv 2, durch das sich ein Strahlengang 3 von dem aufzunehmenden Objekt aus in die Kamera erstreckt. Der Strahlengang 3 wird von einer sich um eine Achse 4 drehende Spiegelblende 5 abwechselnd zu einem zu belichtenden Film 6 hindurchgelassen und in einen Sucherstrahlengang 9 umgelegt. Ein Teil der in den Sucherstrahlengang eintretenden Strahlung wird von einer teildurchlässigen Spiegelfläche 10 zu einem Sucher 7 umgelangt, während der Strahlungsrest 11 zu einer Videokamera 12 gelangt. In einer Ebene 8 liegt ein von der Optik 2 über die Spiegelblende 5 erzeugtes Bild des aufzunehmenden Objektes. Die optischen Bauteile zur Übertragung dieses in der Ebene 8 vorliegenden Bildes in das Okular des Suchers 7 sind im Stand der Technik bekannt und brauchen daher nicht weiter beschrieben zu werden. Ebenso bedarf es keiner Beschreibung der Funktionsweise und der Einzelheiten der an sich im Stand der Technik bekannten Filmkamera 1.

Die Videokamera 12 hat den üblichen, im Stand der Technik bekannten Aufbau. Üblicherweise weist sie als Bildwandler eine Vidikon-Bildröhre auf, bei der das einfallende Licht in ein Ladungsbild umgewandelt wird, daß zeilenweise ausgelesen wird. Ebenso kann die Videokamera als Bildwandlerelement einen sogenannten "Solid state imager" haben, der ebenfalls die einfallende Strahlung in ein Ladungsbild umwandelt.

Die Lage der Spiegelblende 5 wird von einem Lagefühler 13 erfaßt, dessen Ausgangssignal 14 einer Steuerschaltung 15 zugeführt wird. Die Steuerschaltung 15 steht mit einem Steuereingang 17 der Videokamera 12 in Verbindung. Ferner ist die Steuerschaltung 15 an einen Steuereingang eines Bildspeichers 21 angeschlossen, mit dem ein Videoausgangssignal der Videokamera 12 abgespeichert werden kann. Der Bildspeicher 21 steht ausgangsseitig mit einem Videobandaufzeichnungsgerät 23 sowie mit zwei Monitoren 24 in Verbindung.

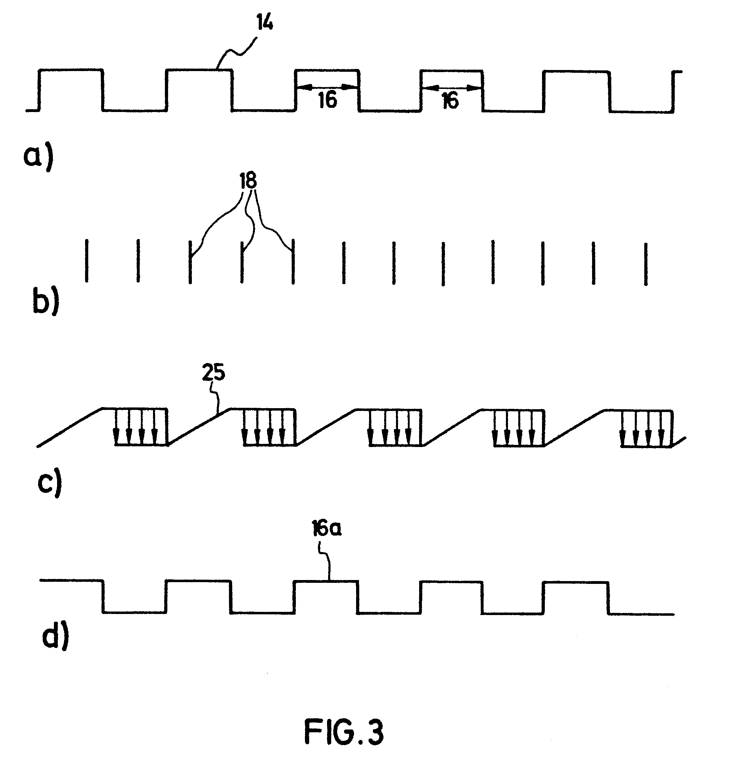

Die Funktionsweise der in Fig. 1 gezeigten Steuereinrichtung wird unter Bezugnahme auf die in Fig. 3 gezeigten zeitlichen Signalverläufe nachfolgend näher erläutert. Der Lagefühler 13 erzeugt eine Pulskette mit einer Pulsfrequenz, die der Rotationsfrequenz der Spiegelblende 5 entspricht. Die Steuereinrichtung 15 bildet aus diesem Ausgangssignal des Lagefühlers 13 ein Signal 16a (Fig. 3d), das jeweils während der Zeitspannen 16 (Fig. 3a) ein hohes logisches Potential hat, während denen der Strahlengang 3 von der Spiegelblende 5 zur Videokamera 12 umgelenkt wird. Das Signal 16a, das an dem Steuereingang 17 der Videokamera 12 anliegt, erzeugt ein Sperrpotential an einem Steuergitter der Vidikon-Röhre (nicht dargestellt), das ein Auslesen des Ladungsbildes verhindert. Somit wird das löschende Auslesen des Ladungsbildes zum Erzeugen des Videoausgangssignals während der Lichtzufuhr zur Videokamera 12 unterbunden.

Fig. 3b zeigt eine Impulskette 18, die den Videotakt der Videokamera 12 darstellt. Der Videotakt 18 stellt den jeweiligen Anfangszeitpunkt des Auslesens eines Ladungsteilbildes bei nicht vorliegenden Sperrsignal 16a dar. Ein Impuls des Videotaktes 18, der während der Zeitdauer des Vorliegens des das Auslesen des Ladungsbildes verhindernden Signales 16a auftritt, führt nicht zu einem Auslesen des Ladungsbildes.

Fig. 3c zeigt den Ladungsverlauf eines Bildpunktes des Ladungsbildes der Vidikon-Röhre. Während der Lichtzufuhr vom Objekt zur Videokamera nimmt die Ladung kontinuierlich zu, während die Ladung nach Unterbrechen der Lichtzufuhr konstant bleibt. Unabhängig von dem gewählten Auslesezeitpunkt, der durch einen abwärts gerichteten Pfeil dargestellt ist, innerhalb der Zeitdauer des Fehlens einer Lichtzufuhr zur Videokamera bleibt das Videoausgangssignal konstant.

Der Bildspeicher 21, dessen Bauweise an sich im Stand der Technik bekannt ist, hat eine Kapazität von einem Teilbild bzw. einem Bild. Nach Übernahme eines Teilbildes bzw. Bildes von der Videokamera 12 unter der Steuerung des Übernahmesignales 20 unterbricht der Bildspeicher 21 die Abspeicherung des Videoausgangssignals. Erst bei erneuter Erzeugung des Übernahmesignals wird das nächste Bild bzw. Teilbild von der Videokamera übernommen. Das Übernahmesignal 20 für den Bildspeicher 21 kann durch Invertieren des das Auslesen des Ladungsbildes verhindernden Signales 16a erzeugt werden.

Der Bildspeicher 21 kann ausgangsseitig mit einer Frequenz ausgelesen werden, die der Teilbildfolgefrequenz einer gewünschten Fernsehnorm entspricht. Somit ermöglicht der Bildspeicher 21 eine frequenzmäßige Entkopplung der Übernahme der Ladungsbilder von der Videokamera 12 zum Bildspeicher und des Auslesens des Bildspeichers an dessen Ausgang 22.

Das am Ausgang 22 des Bildspeichers 21 vorliegende Videosignal wird dem Videobandaufzeichnungsgerät 23 und den Monitoren 24 zugeführt.

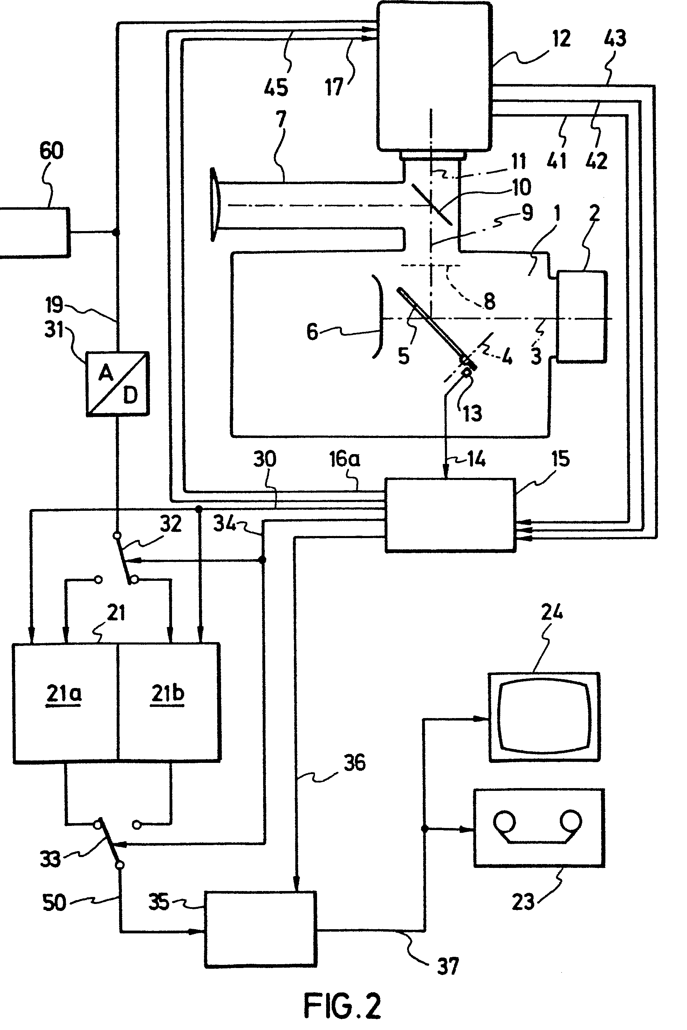

Ein abgewandeltes, gegenüber dem in Fig. 1 gezeigten Ausführungsbeispiel weiter verbessertes Ausführungsbeispiel einer Steuerschaltung für eine Videokamera ist in Fig. 2 dargestellt. Gleiche oder ähnliche Teile der in den Fig. 1 und 2 gezeigten Ausführungsbeispiele sind mit denselben Bezugszeichen bezeichnet, so daß eine nochmalige Beschreibung dieser Teile fortgelassen werden kann.

Die Videokamera 12 ist über drei Leitungen mit drei Eingängen der Steuerschaltung 15 verbunden. Mittels dieser Leitungen führt die Videokamera 12 der Steuerschaltung 15 ein Horizontalsynchronisationssignal 41, ein Farbträgersignal 42 und ein Vertikalsynchronisationssignal 43 zu.

Die Steuerschaltung 15 führt der Videokamera neben dem das Auslesen des Ladungsbildes verhindernden Signal 16a ein Vertikalrücksetzsignal 45 zu.

Die Videokamera 12 führt das Videoausgangssignal einem Analog-Digital-Wandler zu, der das Videoausgangssignal in seiner vollständigen Form, d. h. ohne Unterteilung nach Luminanzsignalen und Chrominanzsignalen in die digitale Form umwandelt. Gleichfalls wandelt der Analog-Digital-Wandler 31 Ausgangssignale eines Zeit- und Steuersignalgenerators 60 um, der einerseits auf dem Film 6 optische Zeit- und Steuermarken anbringt, und andererseits dem Videoausgangssignal der Videokamera 12 entsprechende Zeit- und Steuermarken überlagert, so daß bei einem späteren Filmschneiden eine einfache Zuordnung eines Videofilmabschnittes zu einem bestimmten Filmbild möglich ist.

Das Ausgangssignal des Analog-Digital-Wandlers 31 wird einem ersten Umschalter 32 zugeführt, der mit zwei Teilbereichen 21a, 21b des Bildspeichers 21 in Verbindung steht, in denen jeweils ein Teilbild abspeicherbar ist. Die Teilbereiche 21a, 21b des Bildspeichers 21 stehen mit einem zweiten, ausseitigen Umschalter 33 mit einem gemeinsamen Bildspeicherausgang 50 in Verbindung. Der erste Umschalter 32 und der zweite Umschalter 33 werden über eine Steuersignalleitung 34 von der Steuerschaltung 15 derart angesteuert, daß bei jedem Auslesen eines Teilbildes aus der Videokamera eine Umschaltung stattfindet und das der momentan eingangsseitig an dem Videoausgang 19 angeschaltete Teilbereich 21a, 21b des Bildspeichers 21 ausgangsseitig von dem gemeinsamen Bildspeicherausgang 50 abgeschaltet. Somit kann eine Einspeicherung des Videoausgangssignals nur in denjenigen Teilbereich 21b vorgenommen werden, aus dem gerade kein Teilbild auslesbar ist, wobei andererseits die Auslesung nur aus einem derartigen Teilbereich 21a vorgenommen werden kann, in dem gerade kein Teilbild eingespeichert werden kann.

Die Videokamera 12 arbeitet derartig, daß die Farbträgerphase von aufeinander folgenden, aus ihr ausgelesenen Teilbildern konstant bleibt. Eine an den Ausgang 50 des Bildspeichers 21a, 21b angeschlossene Farbaufbereitungsschaltung 35 nimmt eine Phasendrehung des Farbträgersignales bei jedem zweiten ausgelesenen Teilbild entsprechend der jeweils gewünschten Fernsehnorm vor. Üblicherweise wird die Farbträgerphase bei der Auslesung eines jeden zweiten Teilbildes um 180 $^{\circ}$ gedreht.

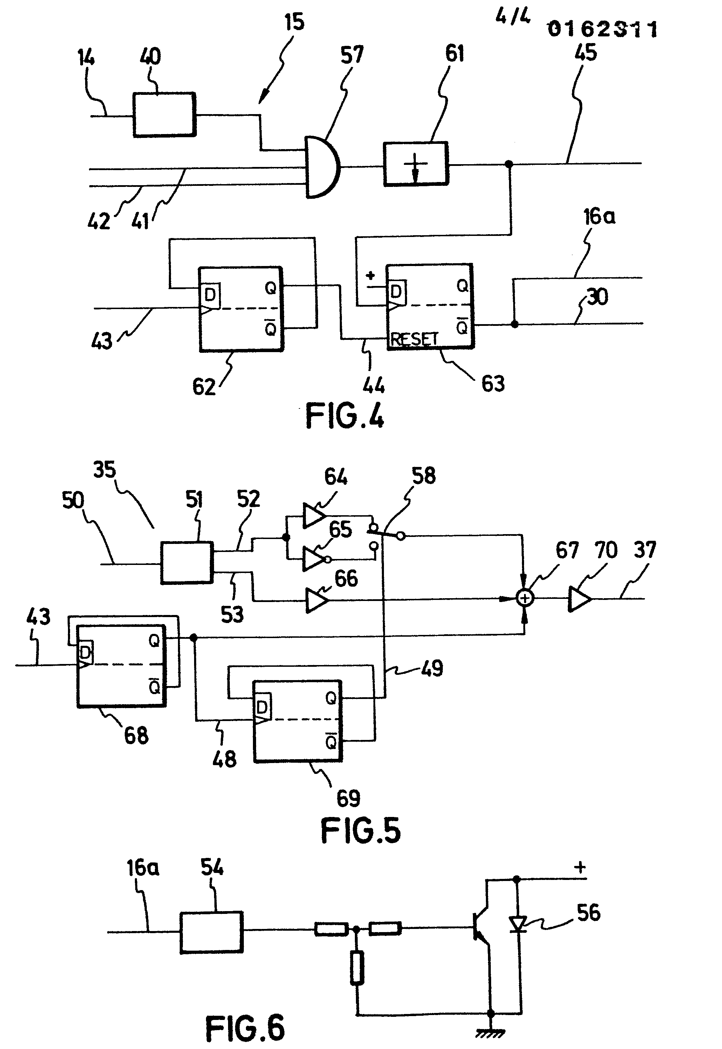

Soweit die Erzeugung des Vertikalrücksetzsignales für die Videokamera 12 und die Steuerung des Bildspeichers 21 mittels eines Speichersteuerungssignales 30 betroffen ist, wird auf die nachfolgende Erläuterung der Schaltung gemäß Fig. 4 hingewiesen.

Bezüglich der Funktionsweise der Farbaufbereitungsschaltung 35 wird auf Fig. 5 hingewiesen.

Während der Zeitdauer der Unterbrechung der Lichtzufuhr zur Videokamera bewirkt die Steuerschaltung 15 eine Abschaltung der Grundbeleuchtung der Videokamera 12. Die diesbezügliche Funktionsweise der Steuerschaltung 15 wird unter Bezugnahme auf Fig. 6 erläutert.

Wie in Fig. 4 dargestellt ist, enthält die Steuerschaltung 15 eine monostabile Kippschaltung 40, die aus dem vom Lagefühler 13 erzeugten pulsförmigen Ausgangssignal 14 einen Impuls formt, dessen Impulsdauer größer ist als der Abstand zwischen zwei Impulsen des Horizontalsynchronisationssignals 41 der Videokamera 12. Das Ausgangssignal der monostabilen Kippstufe 40 wird einem ersten Eingang eines UND-Gliedes 57 zugeführt, dem weiterhin das Horizontalsynchronisationssignal 41 und der Farbträger 42 zugeführt werden. Durch Kombination dieser drei Signale entsteht am Ausgang des UND-Gliedes 57 ein Vertikalrücksetzimpuls erzeugt, dessen Dauer durch eine weitere monostabile Kippstufe 61 festgelegt wird. Dieser Vertikalrücksetzimpuls 45 dient zum Rücksetzen des Videotaktes, um ein Auslesen des Ladungsbildes beginnend mit dem ersten Bildpunkt des Ladungsbildes zu erreichen.

Das Vertikalsynchronisationssignal 43 der Videokamera 12 wird mittels eines D-Flip-Flop 62 frequenzmäßig halbiert und ein Rücksetzeingang 44 eines zweiten D-Flip-Flop 63 zugeführt. Dem Takteingang des zweiten Flip-Flop 63 wird das Vertikalrücksetzsignal 45 zugeführt. Am invertierten Ausgang des zweiten Flip-Flop 63 liegt das Signal zum Verhindern des Auslesens des Ladungsbildes 16a sowie ein weiteres Signal 30 an, mit dem eine Adreßsteuerung des Speichers 21 zurückgesetzt wird. Dadurch wird gewährleistet, daß das beginnend mit dem ersten Bildpunkt des Teilbildes ausgelesene Ladungsbild der Videokamera 12 in entsprechender Reihenfolge in dem Teilbereich 21a, 21b des Bildspeichers 21 eingespeichert wird.

Nachfolgend wird unter Bezugnahme auf Fig. 5 die in Fig. 2 gezeigte Farbaufbereitungsschaltung 35 näher erläutert. Die Farbaufbereitungsschaltung 35 besteht aus einer Filterschaltung 51, der das Ausgangssignal 50 des Bildspeichers 21 zugeführt wird. Die Filterschaltung 51, die an sich im Stand der Technik bekannt ist, trennt das Ausgangssignal in das Chrominanzsignal 52 und in das Luminanzsignal 53. Das Chrominanzsignal 52 wird über einen Verstärker 64 an einen ersten Pol eines Umschalters 58 gelegt. Ferner wird das Chrominanzsignal 52 einem Inverter 65 zugeführt, der ausgangsseitig mit einem zweiten Pol des Umschalters 58 verbunden ist. Das Luminanzsignal 53 wird mittels eines Verstärkers 66 verstärkt und einem Knotenpunkt 67 zugeführt, an den auch der Ausgang des Umschalters 58 angeschlossen ist.

Das Vertikalsynchronisationssignal 43 der Videokamera 12 wird über ein D-Flip-Flop 68 in ein Ausgangssignal 48 von halber Frequenz geteilt. Dieses Ausgangssignal 48 wird mittels eines weiteren D-Flip-Flop 69 nochmals frequenzmäßig geteilt. Der invertierende Ausgang des Flip-Flop 69 steuert den Umschalter 58 für das Chrominanzsignal 52. Das Ausgangssignal des Umschalters 58 wird dem Knotenpunkt 67 zusammen mit dem verstärkten Luminanzsignal 53 und dem Ausgangssignal des Flip-Flop 68 zugeführt. Das Potential des Knotenpunktes wird über einen den Knotenpunkt nachgeschalteten Verstärker 70 angehoben und dient als Videosignal zum Ansteuern des nachgeschalteten Bandaufzeichnungsgeräts 23 bzw. des nachgeschalteten Monitors 24 (Fig. 2).

Fig. 6 zeigt eine Ansteuerschaltung zum Ein- und Ausschalten einer Beleuchtungseinrichtung 56, die zum Erzeugen einer kcamerainternen Grundbeleuchtung des Bildwandlers zum Einstellen des Arbeitspunktes des Bildwandlers dient. Die Beleuchtungseinrichtung ist als Leuchtdiode 56 in üblichen, mit Vidikon-Röhren arbeitenden Videokameras 12 vorgesehen. Daß das Auslesen des Ladungsbildes verhindernde Signal 16a wird über eine Impulsformerstufe 54 an einen Transistorschalter gelegt, der parallel zur Leuchtdiode 56 liegt. Somit wird die Leuchtdiode 56 ausgeschaltet, während das das Auslesen des Ladungsbildes verhindernde Signal 16a vorliegt.

In Abweichung von der in Fig. 6 gezeigten Beschaltung kann die Steuerung der Beleuchtungseinrichtung 56 direkt mittel des Ausgangssignales des Lagefühlers 13 vorgenommen werden. Es muß lediglich sichergestellt werden, daß die Beleuchtungseinrichtung 56 mindestens während der Zeit abgeschaltet ist, während der die Lichtzufuhr zur Videokamera 12 unterbrochen ist.

Unter Verzicht auf eine Optimierung des Arbeitspunktes des Bildwandlers kann die Grundbeleuchtung des Bildwandlers auch zeitlich unbegrenzt abgeschaltet werden. Auch in diesem Fall wird verhindert, daß die Beleuchtungseinrichtung eine Veränderung des Ladungszustandes des Ladungsbildes während der Zeitspanne der Unterbrechung der Lichtzufuhr zur Videokamera herbeiführt. Aufgrund der so erreichten Konstanz des Ladungspegels während der Zeitdauer der Unterbrechung der Lichtzufuhr zur Videokamera kann das Ladungsbild zu jedem beliebigen Zeitpunkt innerhalb dieser Zeitdauer ausgelesen werden, also vorzugsweise in Synchronisation mit dem Horizontalsynchronisationsimpuls der Videokamera 12 und dem Signal vom Lagefühler 13 sowie dem Farbträgersignal.

Obwohl die erfindungsgemäße Steuerschaltung vorzugsweise dort Anwendung findet, wo eine Videokamera in einem Strahlengang einer Laufbild-Spiegelreflexkamera angeordnet ist, der von einer beweglichen Spiegelblende periodisch unterbrochen wird, kann die erfindungsgemäße Steuerschaltung auch überall dort eingesetzt werden, wo eine periodisch unterbrochene Lichtzufuhr zur Videokamera vorliegt oder wo ein mit stark schwankender Helligkeit angestrahltes Objekt mit einer Videokamera aufzunehmen ist.

EP 2369-505/er

Arnold & Richter

Cine Technik GmbH & Co. Betriebs KG

Türkenstraße 89

8000 München 40

Steuerschaltung für eine Videokamera und
Verfahren zum Steuern einer Videokamera

P a t e n t a n s p r ü c h e

1. Steuerschaltung (15) für eine Videokamera (12), mit der ein Ladungsbild eines aufzunehmenden Objektes erzeugbar ist, das bei einem Auslesen des Ladungsbildes zum Erzeugen eines Videoausgangssignals der Videokamera (12) wenigstens teilweise gelöscht wird,

dadurch       g e k e n n z e i c h n e t   ,

daß die Steuerschaltung (15) eine Signalquelle (13) aufweist, deren Ausgangssignal das Vorliegen und das Fehlen einer Lichtzufuhr von dem aufzunehmenden Objekt zur Videokamera (12) darstellt,

daß die Steuerschaltung (15) mit einem Eingang (17) der Videokamera (12) in Verbindung steht und diesem ein das Auslesen des Ladungsbildes verhinderndes Signal (16a) zumindest während der Zeitdauer zuführt, während der das Ausgangssignal der Signalquelle (13) das Vorliegen der Lichtzufuhr darstellt.

2. Steuerschaltung (15) für eine Videokamera (12) nach Anspruch 1, dadurch   g e k e n n z e i c h n e t   ,

daß ein elektronischer Bildspeicher (21) vorgesehen ist, der an die Videokamera (12) angeschlossen ist,

daß die Steuerschaltung (15) mit einem Steuereingang des Bildspeichers verbunden ist und diesem ein Übernahmesignal (20) zum Übernehmen des Ladungsbildes mittels Abspeichern des Videoausgangssignals zuführt, wenn das Ausgangssignal der Signalquelle (13) das Fehlen der Lichtzufuhr darstellt.

3. Steuerschaltung (15) für eine Videokamera (12) nach Anspruch 2, dadurch   g e k e n n z e i c h n e t   ,

daß die Speicherkapazität des Bildspeichers (21) einem Teilbild oder einem Bild entspricht, und

daß der Bildspeicher (21) derart ausgebildet ist, daß er das durch das Übernahmesignal ausgelöste Abspeichern des Videoausgangssignales der Videokamera (12) unterbricht, sobald ein vollständiges Teilbild oder Bild in dem Bildspeicher (21) eingespeichert ist, und daß er das Abspeichern wieder beginnt, sobald ihm erneut das Übernahmesignal zugeführt wird.

4. Steuerschaltung (15) für eine Videokamera (12) nach einem der Ansprüche 1 bis 3, dadurch   g e k e n n -   z e i c h n e t   ,

daß die Signalquelle ein im Strahlengang der Videokamera (12) angeordnetes fotoelektrisches Element ist.

5. Steuerschaltung (15) für eine Videokamera (12) nach einem der Ansprüche 1 bis 3, wobei die Videokamera (12) in einem Strahlengang einer Laufbild-Spiegelreflexkamera (1) angeordnet ist, der von einer beweglichen Spiegelblende (5) periodisch alternierend zu einem zu belichtenden Film und zu der Videokamera (12) gelenkt wird, so daß die Lichtzufuhr zur Videokamera (12) periodisch unterbrochen wird,

dadurch  g e k e n n z e i c h n e t  ,

daß die Signalquelle ein Lagefühler (13) ist, dessen Ausgangssignal die Lage der Spiegelblende (5) darstellt.

6. Steuerschaltung (15) für eine Videokamera (12) nach einem der Ansprüche 1 bis 5, dadurch  g e k e n n - z e i c h n e t  ,

daß das Übernahmesignal (20) für den Bildspeicher (21) das invertierte Signal bezüglich des das Auslesen des Ladungsbildes verhindernden Signales (16a) ist.

7. Steuerschaltung (15) für eine Videokamera (12) nach einem der Ansprüche 3 bis 6, dadurch  g e k e n n - z e i c h n e t  ,

daß das von der Signalquelle (13) erzeugte Ausgangssignal einer in der Steuerschaltung (15) vorgesehenen monostabilen Kippstufe (40) zugeführt wird, die bei Auftreten des Ausgangssignales einen Impuls mit einer den zeitlichen Abstand zwischen zwei Horizontalimpulsen des Horizontalsynchronisationssignals der Videokamera (12) übersteigenden Impulsdauer erzeugt, und

daß das Ausgangssignal der Kippstufe (40) mit dem Horizontalsynchronisationssignal der Videokamera (12) über ein UND-Glied (57) zu einem Vertikalrücksetzsignal für die Videokamera (12) verknüpft wird.

8. Steuerschaltung (15) für eine Videokamera (12) nach Anspruch 7, dadurch  g e k e n n z e i c h n e t  ,

daß dem UND-Glied (57) ferner ein Farbträgersignal (42) der Videokamera (12) zum logischen Verknüpfen mit dem Ausgangssignal der monostabilen Kippstufe (40) und dem Horizontalsynchronisationssignal zum Bilden des Vertikalrücksetzimpulses zugeführt wird.

9. Steuerschaltung (15) für eine Videokamera (12) nach Anspruch 7 oder 8, dadurch  g e k e n n z e i c h n e t ,

daß das Übernahmesignal (20) und das das Auslesen des Ladungsbildes verhindernde Signal (16a) vom Ausgangssignal des UND-Gliedes abgeleitet werden.

10. Steuerschaltung (15) für eine Videokamera (12) nach einem der Ansprüche 2 bis 9, dadurch  g e k e n n - z e i c h n e t  ,

daß der Bildspeicher (21) in Teilbereiche (21a, 21b) unterteilt ist, in die Teilbilder einspeicherbar und aus denen diese Teilbilder auslesbar sind,

daß die Bildsignaleingänge jedes Teilbereichs (21a, 21b) des Bildspeichers (21) über einen ersten Umschalter (32) mit dem Videoausgang (19) der Videokamera (12) verbindbar sind,

daß die Bildsignalausgänge jedes Teilbereiches (21a, 21b) des Bildspeichers (21) über einen zweiten Umschalter (33) mit einem gemeinsamen Bildspeicherausgang verbindbar sind, und

daß die Steuerschaltung (15) die Umschalter (32, 33) derart ansteuert, daß der momentan eingangsseitig an den Videoausgang (19) angeschaltete Teilbereich (21a, 21b) des Bildspeichers (21) ausgangsseitig von dem gemeinsamen Bildspeicherausgang abgeschaltet ist.

11. Steuerschaltung (15) für eine Videokamera (12) nach Anspruch 10, dadurch g e k e n n z e i c h n e t ,

daß die Steuerschaltung (15) die Umschalter (32, 33) bei jedem Auftreten eines das Auslesen des Ladungsbildes verhindernden Signales betätigt.

12. Steuerschaltung (15) für eine Videokamera (12) nach Anspruch 10 oder 11, dadurch g e k e n n z e i c h - n e t ,

daß die Videokamera (12) ein Farbträgersignal erzeugt, dessen Phase unveränderlich gegenüber der des Horizontal- und Vertikalsynchronisationssignales ist, und

daß der gemeinsame Bildspeicherausgang an dem zweiten Umschalter (33) mit einer Farbaufbereitungsschaltung (35) verbunden ist, die die Phase des Farbträgersignales unter der Steuerung durch die Steuereinrichtung (15) entsprechend einer Farbsignalphasenfolge für Teilbilder einer gewünschten Farbfernsehnorm umschaltet.

13. Steuerschaltung (15) für eine Videokamera (12) nach einem der Ansprüche 2 bis 12, dadurch g e - k e n n z e i c h n e t ,

daß ein Analog-Digital-Wandler (31) zwischen dem Videosignalausgang der Videokamera (12) und dem Eingang des Bildspeichers (21) eingeschaltet ist.

14. Steuerschaltung (15) für eine Videokamera (12) nach einem der Ansprüche 1 bis 13, mit einer eine Grundbeleuchtung eines Bildwandlers der Videokamera (12) zum Einstellen eines Arbeitspunktes des Bildwandlers erzeugenden Beleuchtungseinrichtung, dadurch g e k e n n - z e i c h n e t ,

daß die Steuerschaltung (15) mit der Beleuchtungseinrichtung verbunden ist und diese zumindest während der Zeitdauer ausschaltet, während der das Ausgangssignal der Signalquelle (13) das Fehlen der Lichtzufuhr darstellt.

15. Steuerschaltung (15) für eine Videokamera (12) nach Anspruch 14, dadurch g e k e n n z e i c h n e t ,

daß die Steuerschaltung (15) die Beleuchtungseinrichtung mittels des das Auslesen des Ladungsbildes verhindernden Signales ausschaltet.

16. Steuerschaltung (15) für eine Videokamera (12) nach einem der Ansprüche 1 bis 13, mit einer eine Grundbeleuchtung eines Bildwandlers der Videokamera (12) zum Einstellen eines Arbeitspunktes des Bildwandlers erzeugenden Beleuchtungseinrichtung (56), dadurch g e k e n n - z e i c h n e t ,

daß die Beleuchtungseinrichtung (56) zeitlich unbegrenzt abschaltbar ist.

17. Verfahren zum Steuern einer Videokamera (12) mit den Verfahrensschritten

des Erzeugens eines Ladungsbildes eines aufzunehmenden Objektes und

des Erzeugens eines Videoausgangssignals durch ein wenigstens teilweise das Ladungsbild löschendes Auslesen des Ladungsbildes,

g e k e n n z e i c h n e t      durch die Verfahrensschritte

des Erfassens einer periodisch vorliegenden oder fehlenden
Lichtzufuhr von dem aufzunehmenden Objekt zur Videokamera
(12) und

des Verhinderns des Auslesens des Ladungsbildes zumindest
während des Vorliegens der Lichtzufuhr von dem aufzunehmenden Objekt zur Videokamera (12).

18.  Verfahren nach Anspruch 17,     g e k e n n -
z e i c h n e t      durch den Verfahrensschritt

des Auslesens des Ladungsbildes und des Abspeicherns
des Videoausgangssignales während der Fehlens der Lichtzufuhr.

19.  Verfahren nach Anspruch 18, dadurch     g e -
k e n n z e i c h n e t    ,

daß das Abspeichern des Videoausgangssignals unterbrochen
wird, sobald ein Teilbild abgespeichert ist, und

daß das unterbrochene Abspeichern wieder aufgenommen wird,
sobald erneut ein Fehlen der Lichtzufuhr ermittelt wird.

20.  Verfahren nach Anspruch 18 oder 19, dadurch
g e k e n n z e i c h n e t    ,

daß ein Vertikalrücksetzen einer Zeitsteuerung für das
Videoausgangssignal und einer Adreßsteuerung für das
Abspeichern bei Fehlen der Lichtzufuhr in Synchronisation
mit einem Horizontalsynchronisationssignal und einem Farbträgersignal der Videokamera vorgenommen wird.

21.  Verfahren nach einem der Ansprüche 17 bis 20,
g e k e n n z e i c h n e t      durch

den Verfahrensschritt des Abschaltens einer Grundbeleuch-

0162311

tung der Videokamera bei Fehlen der Lichtzufuhr von dem aufzunehmenden Objekt zur Videokamera (12).

0162311

FIG.1

FIG.2

FIG.3

**FIG.4**

**FIG.5**

**FIG.6**